# EUROPEAN PATENT SPECIFICATION

(11) **EP 1 162 526 B1**
(45) Date of publication and mention of the grant of the patent: **15.09.2004**
(21) Application number: 01113406.1
(22) Date of filing: 01.06.2001
(51) Int. Cl.: G05B 23/02

(54) **A method in a process control system and a process control system**
Prozesssteuerungssystem und -Verfahren
Méthode et système de commande d'un processus

(30) Priority: 05.06.2000 FI 20001340
(43) Date of publication of application: 12.12.2001
(73) Proprietor: Metso Automation Oy, 00880 Helsinki (FI)
(72) Inventor: Paunonen, Hannu, 33700 Tampere (FI)
(74) Representative: Leson, Thomas Johannes Alois, Dipl.-Ing.

(56) References cited:
- DE-A- 3 338 396
- US-A- 5 677 993
- PATENT ABSTRACTS OF JAPAN vol. 1997, no. 09, 30 September 1997 (1997-09-30) -& JP 09 128183 A (TOSHIBA CORP), 16 May 1997 (1997-05-16)

## Description

The invention relates to a method according to the preamble of claim 1 in a process control system. The invention also relates to a process control system.

In automatic control of industrial processes, real-time data and history data about the status of the process are displayed to a user at a terminal. For process control systems, there are graphic user interfaces, by means of which information about different parts of the process can be displayed graphically (with graphs, diagrams, tables, process graphic diagrams consisting of symbols). These user interfaces can be based on different operating systems which make it possible to process data for example in the form of windows on the screen of a display device. The different parts of the process, either as large systems or as more detailed images, are displayed to the user on the display device of the terminal as displays which may contain process charts, graphs, tables and, in general, any information illustrating the parts of the process and the run of the process.

In this context, a display or a portion of a display refers to display information visible on the display of the terminal, which is not merely a position indicated as a measured value or status information.

In connection with the terminal, also an input device is provided, to give commands for controlling the process. The display device of the terminal is normally a display screen in a control room or the like, and the input device is normally a keyboard with its peripheral devices, including a device for controlling a cursor or a pointer movable on the screen (e.g. a mouse). The input device can also be the screen of the display device itself, which is capable of directly receiving control commands, such as touches. The terminal can also be stationary in the field (outside the control room, near the process), or portable or wearable.

The displays can be arranged hierarchically so that, for example, by selecting a part of a display on a higher level of hierarchy, a display on a lower level of hierarchy is displayed. In a larger view on the display device, this part of the display can be shown as a certain framing or in another way, and this can be selected by means of the cursor or pointer, and it may be formed to a separate window of its own and/or expanded to a whole view. Furthermore, the display can be linked in such a way that by selecting a link in a shown display, a display linked with this display is accessed. Furthermore, it is possible that displays can be selected from menus which can be retrieved in the display device, or the address of the display can, in principle, also be directly written, if the images are identified with specific address data, such as file names.

Graphic user interfaces applying data in the form of various displays to control and monitor an industrial process are presented e.g. in US patents 5,918,233 and 5,576,946 as well as in European patent 721611. It is typical of such user interfaces that the operator (person monitoring the process) can control the process by means of the user interface, *i.e.* to enter data by the input device to control the process and to monitor the process flow, observe disturbance messages or alarms from different locations, *etc.* Furthermore, as is typical for the programs, situation specific instructions related *e.g.* to the relevant process portion or process step can be shown in the user interface. For example, US patent 5,918,233 presents a process automation system utilizing electrical documentation in which, by selecting different positions of the process with a cursor or pointer *(e.g.* by clicking with a mouse), various documents related to the point in question are displayed. All these documents are ready written by the supplier of the system.

US patent 5,838,261 presents a system control device, particularly for an aircraft. Here, a signal is given if additional information exists for any data. The data to which the additional information relates is in text format.

One example of gathering information in a process control system is US Patent 5,960,381. Situations occurring in the process are stored as starfields where clusters of stars depict the states of various operation units. If a solution has been found to a problem represented by an unusual starfield display, that information may be written and stored along with the archive copy of that starfield display. The image of this starfield display does not reflect the real-time status of the process but is an archived image.

EP-592921 shows a graphical attribute interface in a process control system for entering some attributes manually in a dialogue box corresponding to an icon of a process element that appears in the graphical representation of the process. The attributes are predetermined attributes that depend on the process element and their information contents are strictly determined by the process element itself.

A problem in the use of control systems for industrial processes has been that ready made or written instructions do not always meet the needs of the user. Therefore, in the actual use environment, the user (person controlling the process) must write down, on various note papers, instructions related to actual use situations which are, for example, related to the plant or the part of the plant in which the process is running, or which are based on practical experiences. In particular, the situations of starting up and running down of the process are exceptional, infrequent situations which require particular remembering of things. The ready made instructions by the system supplier are always based on knowledge on the process at its general level, and they can never replace instructions based on the actual user's own experiences, knowledge and own "culture". This will bring along the problem that there will be various notes attached to different locations in the control room, separate instruction booklets, *etc.,* and for example when the operating person is changed, he/she should be aware of all the existing instructions which can be found in various locations. This takes time and consumes human resources in the user organization. Furthermore, information management is made more difficult in that larger and larger processes are run with a small number of persons, wherein the user must manage larger systems.

In document JP-A-9128183, there is disclosed a memorandum input and display device for man-machine interface by means of which an operator's labor for information control by means of paper is reduced by providing a man-machine interface for inputting and displaying memorandums. A touching input device is used for inputting information by touching a display picture for the man-machine interface of a CRT device. A picture memory for the man-machine interface stores a touch signal outputted from the touching input device. An electronic pen input device is used for inputting memorandum information to the display picture through the use of an electronic pen. A memorandum picture memory stores a memorandum signal outputted from the electronic pen input device. A keyboard is used for inputting control/display signals in the picture memory for the man-machine interface and the memorandum picture memory.

With regard to the prior art discussed above, it is an aim of the invention to present an enhanced method and device for improving informativity and user friendliness of process control systems.

This object is achieved by a method in a process control system as defined in claim 1. Furthermore, this object is achieved by a process control system according to claim 7. Advantageous further developments are as set out in the dependent claims 2 to 6.

In connection to one or more displays or portions of a display in the control system, it is possible to write additional information, for example an instruction connected to the display. The instruction is, for example, a list of actions or items to be remembered/checked concerning the running process plant, or a part of it. The additional information can be written in a field allocated for it, which is displayed on the terminal in a suitable way. The field can be accessed in the user interface for example by means of a function button or, from a menu, by activating a corresponding part in the menu with the input device. The text field can be contained in a larger entity, for example in a window equipped with one or more function buttons and/or with one or more menus or in a so-called dialogue box. These may include certain options related to the function of the text field, such as automatic showing of the instruction upon opening the respective display or display portion, which may take place *e.g.* with a certain delay, or showing of the instruction in connection with a specific process step. It is also essential that writing can always be performed when the process control system is in its operating environment and also when the process is running; that is, the user can him/herself write relevant information related to the display being shown and save it for later situations, either as a note for him/herself or for other users. The information can be made visible in the user interface by means of a menu or preferably in such a way that it is marked on the terminal as a symbol shown in connection with the display. This symbol can be activated by a cursor or pointer and thus the text field can be made visible either for reading or for writing. Furthermore, this symbol can also indicate whether information is already written in the corresponding field.

According to the invention, at least one free text field is linked to a particular display which can be shown on the screen to show the process or a part of the process in a suitable view corresponding to the real time situation and which can be used for monitoring and controlling the process. In the system, there are several such displays to which at least one text field is linked, that is, each display of the above type is allotted a freely writeable text field. Such a display shown on the screen of the terminal can be in the form of a chart or diagram and it preferably contains portions which can be activated through the input device of the terminal for controlling the process.

The advantage of the invention is that it can be used to collect information for use by others as well; *i.e.*, experiences of the operation can be collected and transmitted in the user organization. The information is given in the language and terminology of the user organization, and it is based on the specific ways and routines of the organization; that is, it corresponds to the "culture" of the organization. Furthermore, it makes it easier to remember particularly rare operations and reduces errors particularly in difficult operations. In the user organization, learning becomes faster when the knowledge of experienced users can be accessed by newcomers. Such instructions can hardly be given by the process supplier, because every process, even when similar to others, is unique and requires certain "tricks" to operate. Thanks to the invention, these tricks or instructions are accessible to the whole user organization.

The information is not necessarily in the form of instructions, but it can also be history data related to a display or a portion of a display.

In the following, the invention will be described in more detail with reference to the appended drawings, in which
- Fig. 1: shows the operating environment of a control system in a diagram, and
- Fig. 2: shows one feasible embodiment of the invention as an display visible on a display device in the user interface.

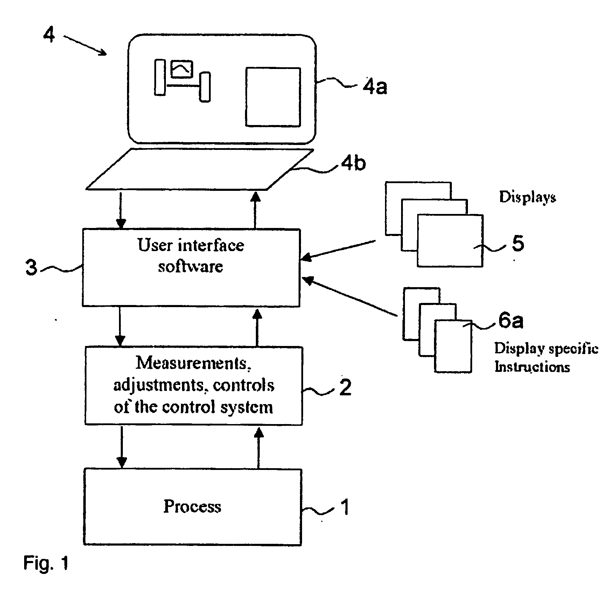

Figure 1 shows the operating environment of a process control system. The process 1 is, in principle, any industrial process comprising several variables which can be measured and which are monitored, controlled and/or adjusted. Thus, the process can comprise, for example, one or more closed control loops. Level 2 "Measurements, adjustments, controls of the control system" describes the measurements by the system and the operations conducted by the system. The arrow from the process describes information obtained from the process, such as measured values and/or status data. The arrow to the process describes measures to control and/or adjust the process. The third level describes the user interface software 3, by means of which the operator can monitor and control the process. The user interface software 3 is in bidirectional communication with the measurements, adjustments and controls 2 of the control system. The user interface software comprises several displays 5 which can be viewed with a terminal 4 using the user interface software and comprising a display device 4a and an input device 4b. The input device can comprise, for example, a keyboard and a mouse to move a cursor or pointer movable on the display and to control the functions produced by it. The input device 4b can also be a display screen operated by pointing with a finger.

The software also comprises display-specific writeable text fields 6a which can also be viewed with the terminal 4 and which are indicated by the words "Display specific instructions" in Fig. 1. In this context, it should be noted that there can be only one text field or several text fields corresponding to one display, and the system may comprise displays to which no text field is connected. Similarly, among the different text fields, one or more may be common to two or more displays. As will be described below, a text field can also belong to a portion of a display present on the whole screen.

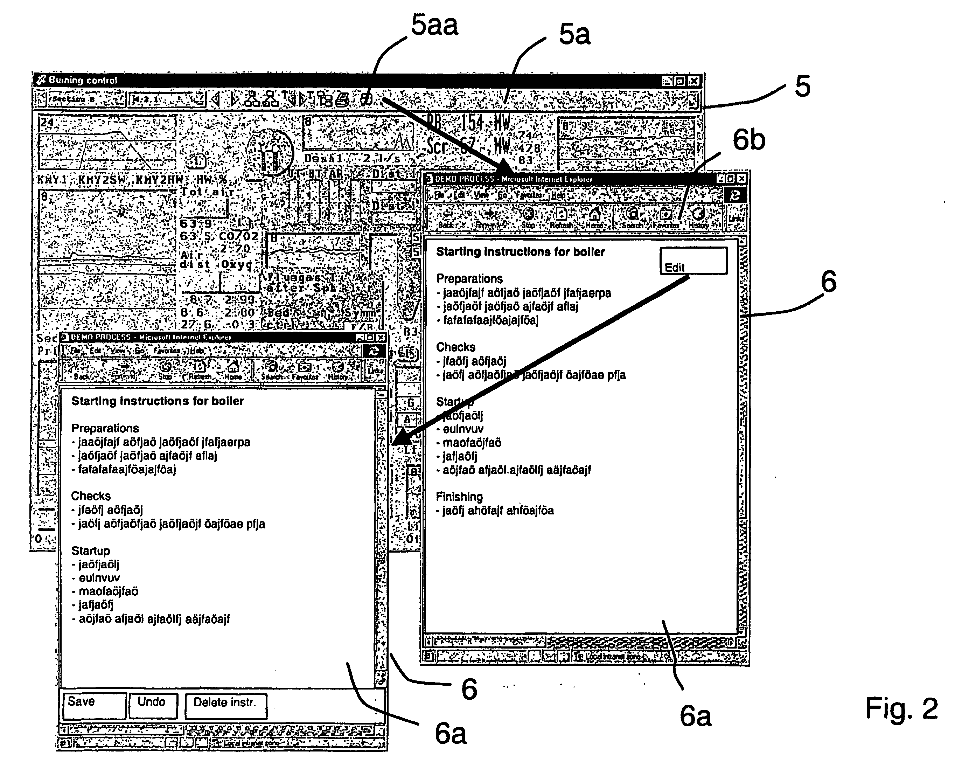

Figure 2 shows one possible view 5 on the display device 4a. The text field 6a to be written is visible in window 6 which preferably comprises a separate tool bar 6b (tool line) or another kind of set of function buttons. The window 6 has been opened connected to a certain display or display portion. A writeable text field means that text can be written in it with the terminal 4. The text field 6a is not necessarily originally blank, but it may contain ready text written by the system supplier, for example instructions which may be only readable but not editable, and the information written by the user is visually distinguished from it, for example with a different font type or size or with a different colour or with a different background. The instructions by the system supplier can also be displayed outside the text field, for example in the same window in which the text field is displayed but above the actual text field. Furthermore, the ready made instructions can have another origin than the system supplier. The producer of such ready text can be the process supplier or a training organization within the plant using the process.

The corresponding text fields of a certain display or display portion can, as such, be arranged according to a certain hierarchy, for example in parallel or subordinately. Such additional documents connected to the text field 6a are preferably displayed when the text field is displayed in the display device 4a. To do this, it is possible to use a button or menu which is preferably displayed in the same window 6 with the corresponding writeable text field 6a, or in the text itself, for example as a link which, when selected with a cursor, displays the additional document.

Furthermore, it is possible that connected to the instruction there is a separate instruction document, in which the user can update information related to writing/editing the instruction, such as the writer/editor of the instruction and the date of writing/editing. This can be opened in the display device when the instruction is open, or it can open automatically when the instruction is stored after writing/editing.

The following is a description relating to a use situation, how the user can write an instruction connected to at least some displays in the process control system (so-called display instruction), but the invention is not limited solely to this system. The example is based on the use of a www browser in viewing the instructions, but the invention is not limited to this way of viewing. The invention can also be used without a www browser, or in such a system in which a www browser is used to view dynamic documents produced in a www server and describing the process that is running.

In the instruction, the users can write instructions, hints or other notes related to their duties: for example, by which operations the grinders are started up for use in paper mills, or how a power plant is switched to a national power supply network in energy production. Figure 2 shows a view 5 of the display device 4a, accessed by means of the user interface software. In this example, the view as such is one display to which a corresponding instruction, that is, a writeable text field is connected. This view may contain portions of the display, which may be provided with separate writeable text fields. Such idisplay portions can be formed in the display device into *e.g.* independent windows which can be expanded to views with the size of the whole screen. The instruction is opened to the www browser by clicking an instruction button 5aa in the tool bar 5a of the image. The user can edit the instruction directly from the user interface of the process control system, by means of the input device 4b of the terminal.

### Instruction

Each display is provided with an instruction which is opened by the instruction button 5aa in the tool bar of the image (view of Fig. 2). The instruction button indicates whether contents have been written in the instruction. In both cases, the instruction can be opened. After the instruction has been opened, it can be edited by using an edit button on the instruction page. The following is an example on how the instructions and their contents can be indicated in the tool bar 5a. The same tool bar contains buttons for moving from one image to another. 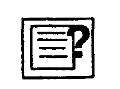 Tool bar button for an instruction with a content 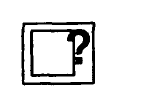 Tool bar button for an instruction which is blank

### Opening an instruction

Click the Open instruction button. At the desktop, a www browser is opened, containing a display specific instruction (Fig. 2, form shown in window 6 on the right hand side). If the www browser is already open, a new page is opened. The instruction can also be blank, if it contains no written text. The instruction can also contain ready text produced by the system supplier or other personnel than those using the process, preferably so that it cannot be deleted or edited.

### Closing an instruction

Click the Close instruction button of the browser. The instruction will disappear from the desktop.

### Shifting to the edit mode

Click the Edit instruction button (displayed on the instruction form). At the desktop, a form is opened which contains the same instruction in the edit mode (Fig. 2, the form displayed in the window 6 down on the left hand side, so-called instruction form).

Another alternative would be to open the same instruction in the edit mode of the browser. It would offer the user more versatile possibilities but, on the other hand, it would bring such functions which the user does not necessarily manage. This might, in turn, create insecurity and raise the threshold to change the instruction.

### Writing/editing the instruction

Edit the text on the instruction form by normal text editing or add text, if the instruction was blank.

### Closing of writing/editing

If you want to save the changes, click the Save button. The instruction is closed and the changes are saved.
If you want to close the editing without saving the changes, click the Cancel button. The instruction is closed and the instruction remains in its original form.
If you want to delete the whole instruction, click the Delete instruction button. This will delete the text written by the user. All the buttons are displayed in the form when the instruction is in the edit mode.

The following is an example of the same implementation solution from the point of view of operation of the system and the arrangement of the files.

### Preparations

When the system supplier prepares the system to working condition for the user organization, an instruction file location directory is defined under the name "Picture_guides" and a blank instruction base (pictureGuideBase.htm) is placed in said directory .

### Changing a display in the display window

When the user changes the display, the system checks, in connection with the display change, whether an instruction is stored for the display under its name, and updates the display instruction button accordingly.

### Opening an instruction

The user presses the display instruction button in the tool bar.
If no instruction is stored for the display, the blank form base located in a common file is opened in the www browser. This blank base contains an Edit button.
If an instruction was already stored for the display, this is opened in the www browser. The instruction contains an Edit button.

### Writing instructions

The instruction is opened as described above.
The user writes/edits the text and presses the Save button.
The text is stored in the file Picture_guides\image_name.htm
The form is closed and the instruction document is updated.
If the user deletes the instruction, the corresponding instruction file is deleted.

The invention is not restricted to the description of operation as presented above, but it can be modified within the scope of the inventive idea presented by the claims. Instead of a tool bar, the instruction can be displayed starting from a menu which can be accessed for example from a menu line or menu bar. Instead of an actual tool bar, the buttons can be grouped also in another way. The display specific instruction can also be made visible on the screen in another way than from the tool bar, menu or another button, when the corresponding display is shown in the display device. For example, it is possible that the display visible in the display device comprises different portions which can be activated by the cursor, to display the instructions related to the portions.

The instruction can be in the form of a separate file, or it can be part of the same display file as the display.

The instructions can be linked in such a way that at the stage of writing them, they can be linked *e.g.* in such a way that the instruction has a reference (link) to another instruction, and this reference can be activated by the cursor or pointer to display the respective instruction. The reference or link can be in the text field itself, or outside the text field in the instruction form, for example in the same window as the text field.

The information to be written in the text field is not necessarily an instruction, but it can also be a description of events providing a possibility for a display-specific history database.

The terminal 4, by which the display and the display-specific instructions are displayed, can also be portable in the field, such as a portable or wearable terminal.

The invention relates to a method in a process control system, in which displays describing the status of a process (1) can be selected with a terminal (4). A display-specific text field (6a) is connected to one or more displays or display portions, in which text field (6a) additional information related to the display can be written with the terminal (4) in the operating environment of the process control system. The invention also relates to a process control system, which is connected in a control communication with a process (1) and which comprises a terminal (4) which is in connection with user interface software (3) for selecting displays (5) describing the status of the process, display-specific text fields (6a) being connected to the displays.

## Claims

1. A method in a process control system, in which displays describing the status of a process can be selected with a terminal (4), wherein a display-specific text field (6a) is connected to one or several displays, in which text field (6a) additional information related to the display can be written in the operating environment of the process control system, and that the display-specific text field (6a) can be displayed by activating one of the following items visible in the display: a menu component, a tool bar component or a button or an icon, by means of an input device (4b) of the terminal (4), such as a cursor or pointer or a display screen operated by pointing with a finger, or the like.

2. The method according to claim 1, wherein in the process automation system, the displays are on at least two different levels of hierarchy in such a way that displays of a lower level describe a part of a process display of a higher level.

3. The method according to claim 1, wherein the portion, for example a button or an icon, indicates whether the field corresponding to it has a content.

4. The method according to any of the preceding claims, wherein the additional information of the text field (6a) is stored as a separate file, for example as an htm file.

5. The method according to any of the preceding claims 1 to 4, wherein the additional information of the text field (6a) is stored in the same display file as the display.

6. The method according to any of the preceding claims, wherein the additional information is written by the personnel operating the process.

7. A process control system, which is connected in a control communication with a process (1) and which comprises a terminal (4) which is in connection with user interface software (3) for selecting displays describing the status of the process, wherein a display-specific text field (6a) is related to at least one or several displays, in which text field (6a) additional information can be written with the terminal (4), and that the display-specific text field (6a) can be displayed by activating one of the following items visible in the display: a menu component, a tool bar component or a button or an icon, by means of an input device (4b) of the terminal (4), such as a cursor or pointer or a display screen operated by pointing with a finger, or the like.

## Patentansprüche

1. Verfahren in einem Prozesssteuerungssystem, bei dem Anzeigen, die den Zustand eines Prozesses beschreiben, mit einem Endgerät (4) ausgewählt werden können, wobei ein anzeigenspezifisches Textfeld (6a) mit einer Anzeige oder mehreren Anzeigen verbunden ist, wobei in dem Textfeld (6a) zusätzliche Informationen, die auf die Anzeige bezogen sind, in die Betriebsumgebung des Prozesssteuerungssystems geschrieben werden können, wobei das anzeigenspezifische Textfeld (6a) durch Aktivieren mittels einer Eingabevorrichtung (4b) des Endgeräts (4), wie beispielsweise eines Cursors oder eines Zeigers oder eines durch Deuten mit einem Finger betriebenen Anzeigebildschirms oder dergleichen, eines der nachfolgenden Elemente sichtbar in der Anzeige angezeigt werden kann: eine Menükomponente, eine Symbolleistenkomponente oder eine Taste oder ein Symbol.

2. Verfahren nach Anspruch 1, wobei in dem Prozessautomationssystem sich die Anzeigen auf zumindest zwei unterschiedlichen Hierarchiestufen auf eine derartige Weise befinden, dass Anzeigen einer niedrigeren Stufe einen Teil einer Prozessanzeige einer höheren Stufe beschreiben.

3. Verfahren nach Anspruch 1, wobei der Abschnitt, beispielsweise eine Taste oder ein Symbol, anzeigt, ob das Feld, das diesem entspricht, einen Inhalt aufweist.

4. Verfahren nach einem der vorhergehenden Ansprüche, wobei die zusätzlichen Informationen des Textfeldes (6a) als eine separate Datei gespeichert werden, beispielsweise als eine htm-Datei.

5. Verfahren nach einem der vorhergehenden Ansprüche 1 bis 4, wobei die zusätzlichen Informationen des Textfeldes (6a) in derselben Anzeigedatei wie die Anzeige gespeichert werden.

6. Verfahren nach einem der vorhergehenden Ansprüche, wobei die zusätzlichen Informationen durch das Personal geschrieben werden, das den Prozess betreibt.

7. Prozesssteuerungssystem, das in einer Steuerungskommunikation mit einem Prozess (1) verbunden ist und das ein Endgerät (4) umfasst, welches in Verbindung mit einer Benutzerschnittstellensoftware (3) zur Auswahl von Anzeigen steht, die den Zustand des Prozesses beschreiben, wobei ein anzeigenspezifisches Textfeld (6a) auf zumindest eine Anzeige oder mehrere Anzeigen bezogen ist, wobei in dem Textfeld (6a) mit dem Endgerät (4) zusätzliche Informationen geschrieben werden können, wobei das anzeigenspezifische Textfeld (6a) durch Aktivieren mittels einer Eingabevorrichtung (4b) des Endgeräts (4), wie beispielsweise eines Cursors oder eines Zeigers oder eines durch Deuten mit einem Finger betriebenen Anzeigebildschirms oder dergleichen, eines der nachfolgenden Elemente sichtbar in der Anzeige angezeigt werden kann: eine Menükomponente, eine Symbolleistenkomponente oder eine Taste oder ein Symbol.

## Revendications

1. Procédé dans un système de commande de processus, dans lequel des affichages décrivant l'état d'un processus peuvent être sélectionnés par un terminal (4), dans lequel un champ de texte spécifique à un affichage (6a) est relié à un ou plusieurs affichages, dans lequel champ de texte (6a) des informations supplémentaires concernant l'affichage peuvent être écrites dans l'environnement de fonctionnement du système de commande de processus, et le champ de texte spécifique à un affichage (6a) peut être affiché en activant l'un des éléments suivants visibles sur l'affichage : un élément de menu, un élément de barre d'outils ou un bouton ou une icône, au moyen d'un dispositif d'entrée (4b) du terminal (4), tel qu'un curseur ou un pointeur ou un écran d'affichage tactile, ou similaire.

2. Procédé selon la revendication 1, dans lequel, dans le système de commande de processus, les affichages sont sur au moins deux niveaux de hiérarchie différents de sorte que des affichages d'un niveau inférieur décrivent une partie d'un affichage de processus d'un niveau supérieur.

3. Procédé selon la revendication 1, dans lequel l'élément, par exemple un bouton ou une icône, indique si le champ correspondant à celui-ci a un contenu.

4. Procédé selon l'une quelconque des revendications précédentes, dans lequel les informations supplémentaires du champ de texte (6a) sont mémorisées en tant que fichier séparé, par exemple, en tant que fichier htm.

5. Système selon l'une quelconque des revendications précédentes 1 à 4, dans lequel les informations supplémentaires du champ de texte (6a) sont mémorisées dans le même fichier d'affichage que l'affichage.

6. Procédé selon l'une quelconque des revendications précédentes, dans lequel les informations supplémentaires sont écrites par le personnel mettant en oeuvre le processus.

7. Système de commande de processus, qui est connecté, dans une communication de commande, à un processus (1) et qui comprend un terminal (4) qui est en liaison avec un logiciel d'interface utilisateur (3) pour sélectionner des affichages décrivant l'état du processus, dans lequel un champ de texte spécifique à un affichage (6a) concerne au moins un ou plusieurs affichages, dans lequel champ de texte (6a) des informations supplémentaires peuvent être écrites par le terminal (4), et le champ de texte spécifique à un affichage (6a) peut être affiché en activant l'un des éléments suivants visibles sur l'affichage : un élément de menu, un élément de barre d'outils ou un bouton ou une icône, au moyen d'un dispositif d'entrée (4b) du terminal (4), tel qu'un curseur ou un pointeur ou un écran d'affichage tactile, ou similaire.
